# EUROPEAN PATENT APPLICATION

(11) **EP 4 525 191 A2**
(43) Date of publication of application: **19.03.2025**
(21) Application number: 24199632.1
(22) Date of filing: 11.09.2024
(51) Int. Cl.: H01M 50/507, H01M 50/519

(54) **CCS ASSEMBLY AND BATTERY MODULE**

(30) Priority: 12.09.2023 CN 202311172580; 12.09.2023 CN 202322477921 U; 17.04.2024 WO PCT/CN2024/088258
(71) Applicant: Eve Energy Co., Ltd., Huizhou, Guangdong 516006 (CN)
(72) Inventor: ZHANG, Guojiang, Huizhou, Guangdong, 516006 (CN); REN, Chaoju, Huizhou, Guangdong, 516006 (CN)
(74) Representative: Murgitroyd & Company

(57) **Abstract**

The present disclosure provides a CCS assembly (1) and a battery module. The CCS assembly (1) includes an insulating film (4) and a busbar group. The busbar group includes two output bars (10a, 10b), connecting bars (10c), and two positioning plates (30a, 30b). The two output bars (10a, 10b) are correspondingly arranged at two ends of the battery module in a length direction. The connecting bars (10c) are arranged between the two output bars (10a, 10b). At the same end of the battery module in the length direction, the output bar (10a/10b) is at least partially supported by the positioning plate (30a/30b), and the positioning plate (30a/30b) extends toward the connecting bar (10c) adjacent to the output bar (10a/10b). The insulating film (4) is disposed on one side of the busbar group facing battery cells (20) of the battery module. The busbar group is connected to the insulating film (4).

## Description

### TECHNICAL FIELD

The present disclosure relates to the technical field of batteries, and in particular, to a cells contact system (CCS) assembly and a battery module.

### BACKGROUND

In related art, a CCS assembly of a cylindrical power battery module generally includes two output bars and a plurality of connecting bars arranged between the two output bars. The connecting bar includes a plurality of conductive units, and each conductive unit includes a positive part and a negative part connected with each other. The conductive unit is configured to connect adjacent battery cells in series. Specifically, the positive part of the conductive unit is connected to a positive pole terminal of one battery cell, and the negative part of the same conductive unit is connected to a negative pole terminal of the other battery cell. The plurality of connecting bars are arranged along a length direction of the battery module. In order to integrate the CCS assembly, the output bars and the connecting bars are generally integrated on a plastic bracket. However, with the development of the CTP or CTB trend in battery systems, a length of the battery module is gradually increasing, which makes it difficult for conventional plastic brackets to meet the integration needs of the output bars and connecting bars. Moreover, the plastic bracket with a long-length has the disadvantages of high mold costs, difficulty in controlling processing accuracy, and difficulty in controlling the matching of dimensional chains.

### SUMMARY

The present disclosure aims to solve the following technical problems: How to reduce the production costs of the CCS assembly, and how to enhance the strength or stiffness of the CCS assembly to facilitate subsequent transportation and processing of the CCS assembly.

In a first aspect, the present disclosure provides a CCS assembly applied to a battery module. The CCS assembly includes an insulating film and a busbar group. The busbar group includes two output bars, a plurality of connecting bars, and two positioning plates. The two output bars are correspondingly arranged at two ends of the battery module in a length direction, and the connecting bars are arranged between the two output bars. At the same end of the battery module in the length direction, the output bar is at least partially supported by the positioning plate that is correspondingly arranged. The positioning plate extends toward the connecting bar adjacent to the corresponding output bar. The insulating film is disposed on one side of the busbar group facing battery cells of the battery module. The busbar group is connected to the insulating film.

In a second aspect, the present disclosure provides a battery module, including battery cells and the above-mentioned CCS assembly. The battery cells pass through the insulating film and the positioning plates to connect with the busbar groups.

Beneficial effects:

(1) The present disclosure integrates the busbar group (i.e. the output bars, the connecting bars, and the positioning plates) on the insulating film, which may effectively reduce the production costs. Moreover, the insulating film is easy to cut, so it is easy to control the processing accuracy when the insulating film is applied in the battery module with a long-length, facilitates the arrangement and adjustment of the busbar group, and has low processing difficulty.

(2) The positioning plates of the present disclosure are located at both ends of the CCS assembly in the length direction of the battery module, which may provide auxiliary support to the CCS assembly, enhance the strength or stiffness of the CCS assembly to a certain extent, and facilitate subsequent transportation and processing of the CCS assembly.

(3) In the present disclosure, the insulating film provided on the side of the busbar group facing the battery cells may effectively insulate the busbar group and the battery cells to prevent short circuits of the battery cells.

### BRIEF DESCRIPTION OF THE DRAWINGS

FIG. 1 is a top-view structural schematic diagram of a CCS assembly provided by embodiments of the present disclosure.
FIG. 2 is a three-dimensional structural schematic diagram of a CCS assembly provided by embodiments of the present disclosure.
FIG. 3 is an exploded structural schematic diagram of a CCS assembly provided by embodiments of the present disclosure.
FIG. 4 is a three-dimensional structural schematic diagram of a busbar group provided by embodiments of the present disclosure.
FIG. 5 is a three-dimensional structural schematic diagram of a negative positioning plate provided by embodiments of the present disclosure.
FIG. 6 is a three-dimensional structural schematic diagram of a positive positioning plate provided by embodiments of the present disclosure.
FIG. 7 is a three-dimensional structural schematic diagram of a negative output bar provided by embodiments of the present disclosure.
FIG. 8 is a front-view structural schematic diagram of a negative output bar provided by embodiments of the present disclosure.
FIG. 9 is a three-dimensional structural schematic diagram of a positive output bar provided by embodiments of the present disclosure.
FIG. 10 is a front-view structural schematic diagram of a positive output bar provided by embodiments of the present disclosure.
FIG. 11 is a connection structural schematic diagram of an FPC and an insulating film provided by embodiments of the present disclosure.
FIG. 12 is a three-dimensional structural schematic diagram of a battery cell provided by embodiments of the present disclosure.

List of reference numerals: 1, CCS assembly; 10a, negative output bar; 10b, positive output bar; 10c, connecting bar; 11, outer connection part; 12, inner connection part; 121, main portion; 122, extension portion; 123a, negative connecting piece; 123b, positive connecting piece; 124, bending portion; 125, third positioning hole; 13, conductive unit; 131, positive part; 132, negative part; 20, battery cell; 201, positive pole terminal; 202, negative pole terminal; 30a, negative positioning plate; 30b, positive positioning plate; 31, motherboard; 311, second fillet; 32, connecting protrusion; 321, first fillet; 33, exposure hole; 34, first positioning hole; 4, insulating film; 401, base film; 402, adhesive layer; 41, second welding hole; 42, second positioning hole; 43, first welding holes; 5, FPC; 501, PI layer; 502, substrate layer; 51, collection nickel sheet; 52, NTC; 6, connector.

### DETAILED DESCRIPTION

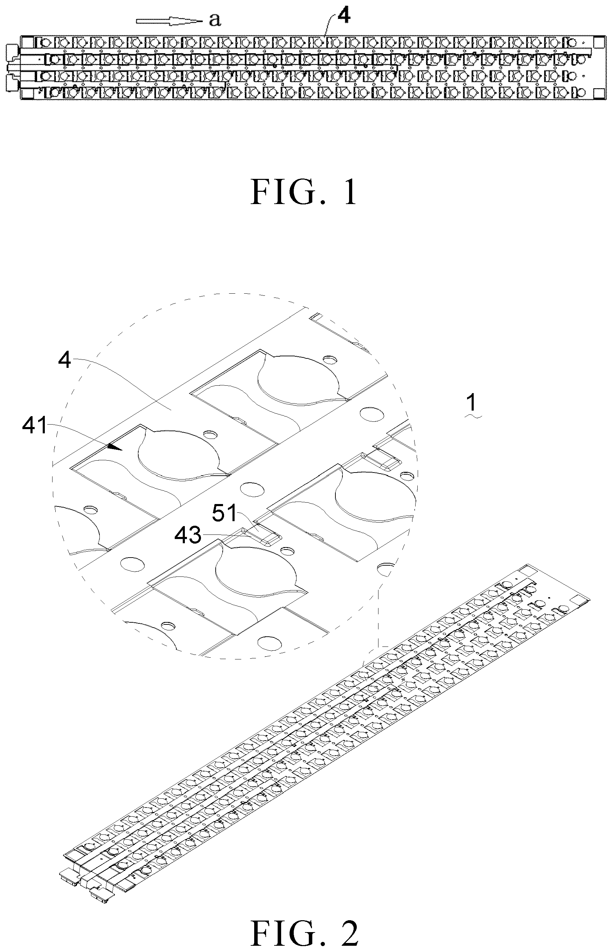

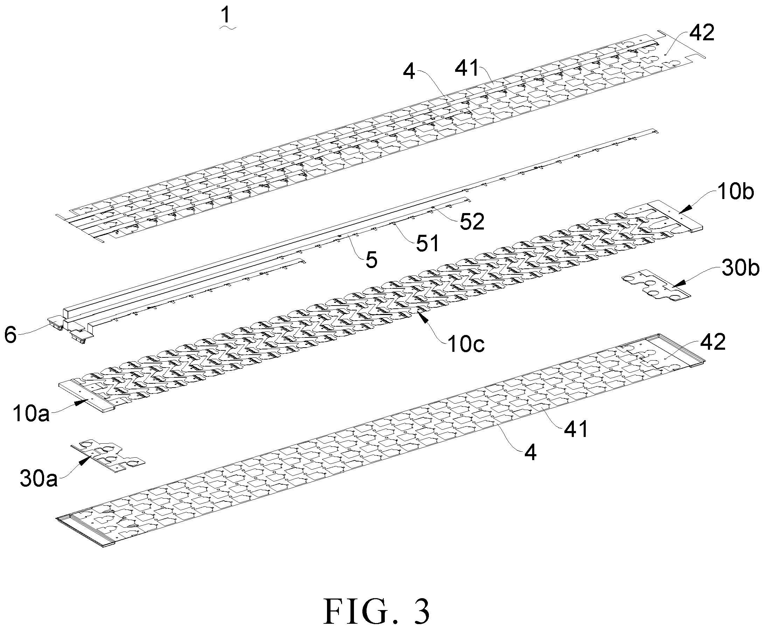

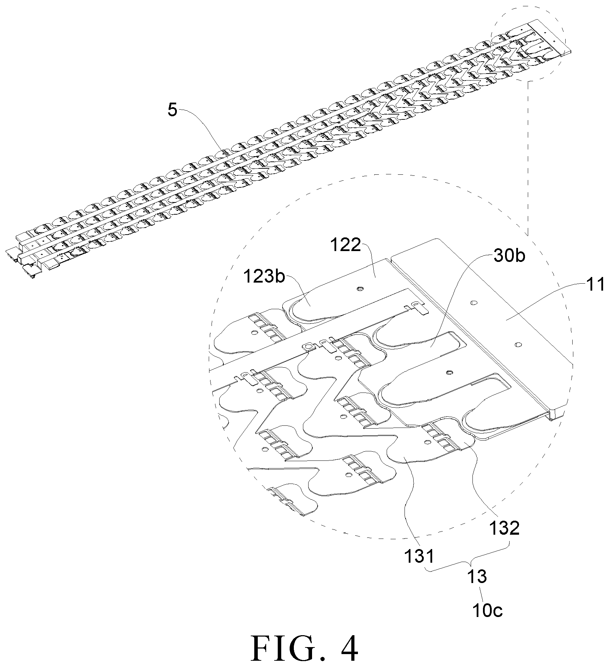

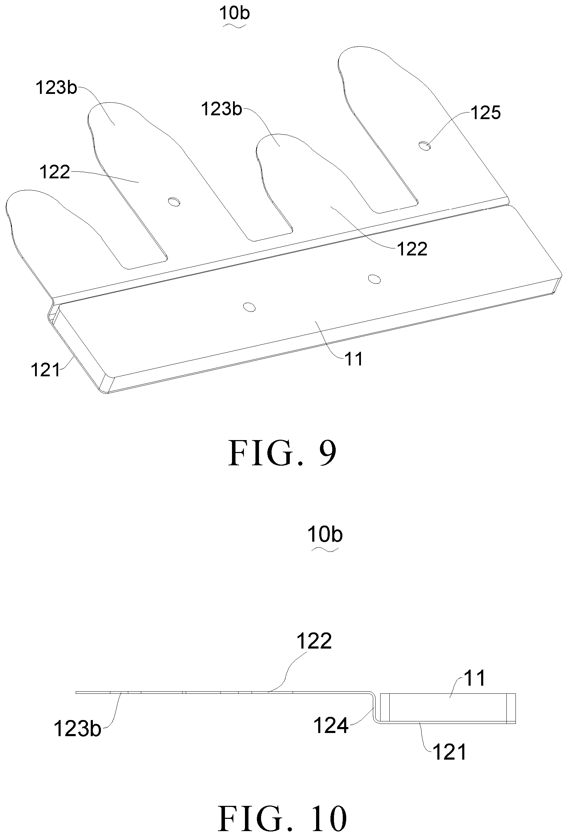

Referring to FIG. 1 to FIG. 12, a CCS assembly 1 includes an insulating film 4 and a busbar group. The busbar group includes output bars, connecting bars 10c, and positioning plates. Specifically, as illustrated in FIG. 3 and FIG. 4, two output bars are correspondingly arranged at two ends of a battery module in a length direction (that is, a length direction a of the CCS assembly 1). A plurality of connecting bars 10c are arranged between the two output bars. At the same end of the battery module in the length direction, the output bar is at least partially supported by one corresponding positioning plate, and the positioning plate extends toward the connecting bar 10c adjacent to the corresponding output bar. The insulating film 4 is disposed on one side of the busbar group facing battery cells 20 of the battery module. The busbar group is connected to the insulating film 4. That is, the output bars, the connecting bars 10c, and the positioning plates are all connected to the insulating film 4. In the embodiments, by integrating the busbar group (i.e. the output bars, the connecting bars 10c, and the positioning plates) on the insulating film 4, the production costs may be effectively reduced. Moreover, the insulating film 4 is easy to cut, so it is easy to control the processing accuracy when the insulating film is applied in the battery module with a long-length, facilitates the arrangement and adjustment of the busbar group, and has low processing difficulty. The positioning plates here are located at the two ends of the CCS assembly 1 in the length direction of the battery module, which may provide auxiliary support to the CCS assembly 1, enhance the strength or stiffness of the CCS assembly 1 to a certain extent, and facilitate subsequent transportation and processing of the CCS assembly 1. The insulating film 4 provided on the side of the busbar group facing the battery cells 20 may effectively insulate the busbar group and the battery cells 20 to prevent short circuits of the battery cells 20.

In the embodiments, as illustrated in FIG. 2 and FIG. 4, the output bars include a positive output bar 10b and a negative output bar 10a. The positive output bar 10b is located at a positive output end of the battery module, and the negative output bar 10a is located at a negative output end of the battery module. The output bar is provided with the same number of connecting pieces as conductive units 13 constituting one single connecting bar 10c. The connecting piece of the negative output bar 10a is a negative connecting piece 123a configured to connect with a negative pole terminal 202 of one battery cell 20 which is located at at the negative output end of the battery module. The connecting piece of the positive output bar 10b is positive connecting piece 123b configured to connect with a positive pole terminal 201 of one battery cell 20 which is located at the positive output end of the battery module.

Furthermore, second welding holes 41 are provided on the insulating film 4, and each second welding hole 41 passes through the insulating film 4. Positive parts 131 and negative parts 132 of the conductive units 13 pass through the second welding holes 41 and abut against the battery cells 20. Such arrangement may ensure that an area on one side of the busbar group close to the battery cells 20 except the positive parts 131 and the negative parts 132 of the conductive units 13 is effectively insulated, which does not affect the welding of the conductive units 13 and the battery cells 20 while ensuring the security of the battery module.

In the embodiments, the positioning plate is a plastic plate. The insulating film 4 includes but is not limited to hot melt adhesive film.

In the embodiments, the insulating film 4 includes a base film 401 and an adhesive layer 402, and the adhesive layer 402 is disposed on one side facing the busbar group. The base film 401 layer may be made of polyethylene terephthalate (PET). A thickness of the base film 401 is D 1, where 0 µm < D1 ≤ 150 µm. A thickness of the adhesive layer 402 is D2, where 0 µm < D2 ≤ 50 µm.

The busbar group is bonded or thermally pressed with the insulating film 4. In some embodiments, the busbar group and the insulating film 4 are thermally pressed together.

As illustrated in FIG. 3, FIG. 4, and FIG. 7 to FIG. 10, the output bar includes an inner connection part 12 and an outer connection part 11 connected with each other. The outer connection part 11 and the inner connection part 12 are separate parts. A thickness of the outer connection part 11 is greater than a thickness of the inner connection part 12. The positioning plate abuts against a side surface of the inner connection part 12 facing the battery cells 20 in its thickness direction. The positioning plate abutting the inner connection part 12 can support the thin inner connection part 12, improve the structural strength of the inner connection part 12, and effectively prevent the inner connection part 12 from being damaged during the transportation of the CCS assembly 1. Moreover, the output bar composed of separate parts including the outer connection part 11 and the inner connection part 12 has simple processing technology and low production costs. Moreover, the structural design in which the thickness of the outer connection part 11 is greater than the thickness of the inner connection part 12 may effectively improve the structural strength of the output bar, thereby improving the reliability of the connection structure between the modules when they are connected in series. At the same time, the inner connection part 12 with the small thickness is convenient for welding with the battery cells 20, while the outer connection part 11 with a large thickness may ensure the flow capacity of the output bar.

In the embodiments, the inner connection part 12 is integrally stamped and formed. The inner connection part 12 and the outer connection part 11 are welded. In the embodiments, the connecting piece is a part of the inner connection part 12.

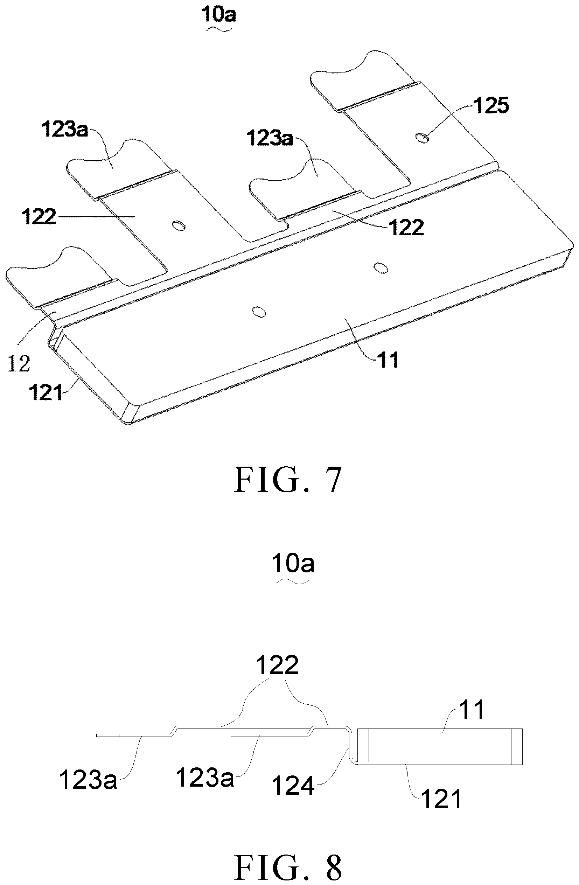

As illustrated in FIG. 7 to FIG. 10, the inner connection part 12 includes a main portion 121 connected to the outer connection part 11. One or more extension portions 122 are provided on one side of the main portion 121 away from the outer connection part 11. The extension portion 122 is configured to connect with the positive pole terminal 201 or the negative pole terminal 202 of one battery cell 20. The positioning plate abuts against the extension portions 122. Specifically, a free end of the extension portion 122 of the positive output bar 10b is connected to the positive pole terminal 201 of one battery cell 20, and a free end of the extension portion 122 of the negative output bar 10a is connected to the negative pole terminal 202 of one battery cell 20. The extension portion 122 is a part of the inner connection part 12. An extending direction of the extension portion 122 here is parallel to an extending direction of the main portion 121, and the extension portions 122 are connected to the main portion 121 by a bending portion 124. Furthermore, the main portion 121, the bending portion 124, and the one or more extension portions 122 are integrated to together form the inner connection part 12. In the embodiments, the outer connection part 11 is provided in an area corresponding to the main portion 121. The outer connection part 11 may increase the structural strength of the main portion 121, and the positioning plate abutting the extension portions 122 may increase the structural strength of the extension portions 122. Thus, the structural strength of inner connection part 12 may be improved as a whole, and the flow capacity of the output bar may be improved at the same time. The structural arrangement of the positioning plate abutting against the extension portions 122 may balance the structural strength of each area of the inner connection part 12 on the basis of increasing the structural strength of the main portion 121 of the outer connection part 11. In the embodiments, a number of the extension portions 122 is equal to a number of the connecting pieces, and the connecting pieces are arranged in one-to-one correspondence at ends of the extension portions 122 away from the outer connection part 11. It should be noted that in the embodiments, the connecting piece serves as a free end of the corresponding extension portion 122.

Of course, in other embodiments, the positioning plate may also be attached to and extend along the side surface of the inner connection part 12 facing the battery cells 20, and the positioning plate at least partially abuts the extension portions 122, the bending portion 124, and the main portion 121.

In the embodiments, as illustrated in FIG. 3 to FIG. 6, the positioning plate is disposed between the extension portion 122 and the battery cell 20. The positioning plate includes a motherboard 31. A connecting protrusion 32 is provided on a side surface of the motherboard 31 facing the extension portion 122. The connecting protrusion 32 supports the extension portion 122. The connecting protrusion 32 is disposed away from the free end of the extension portion 122 in the extending direction of the extension portion 122. That is, the connecting protrusion 32 is disposed on one lateral side of the extension portion 122 close to the outer connection part 11. In other words, a root of the extension portion 122 is supported by the connecting protrusion 32. Such arrangement allows a position of the positioning plate supporting the extension portion 122 closer to the outer connection part 11, thereby preventing excessive support of the positioning plate on the extension portion 122, which may weaken the ability of the extension portion 122 to bend towards or away from the battery cells 20. That is, the structural design provided on the side of the connecting protrusion 32 close to the outer connection part 11 may support the extension portion 122 to enhance its structural strength without affecting its deformation ability toward or away from the battery cells 20, which is convenient for subsequent connection between the extended portion 122 and the battery cell 20, avoiding false welding between the extended portion 122 and the battery cell 20.

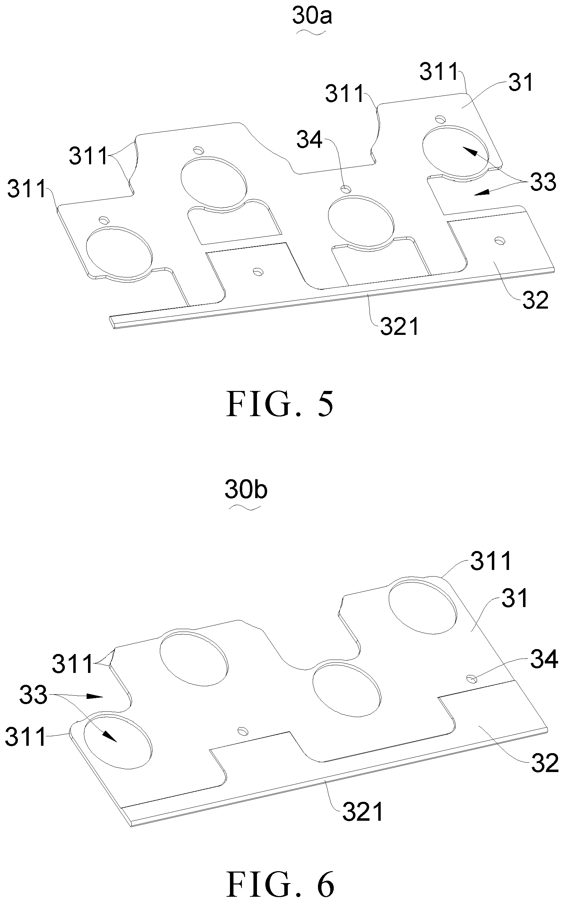

As illustrated in FIG. 5 and FIG. 6, the embodiments provide a negative positioning plate 30a and a positive positioning plate 30b. They have the same function, and their shapes may be designed according to shapes of the negative output bar 10a and the positive output bar 10b, no specific restrictions are made here. It should be noted that the positive positioning plate 30b is located on one side of the positive output bar 10b, and the negative positioning plate 30a is located on one side of the negative output bar 10a.

In the embodiments, the motherboard 31 is provided with one or more exposure holes 33, and each of the exposure holes 33 passes through the motherboard 31. The free end (i.e. the connecting piece) of the extension portion 122 is connected to the positive pole terminal 201 or the negative pole terminal 202 of one battery cell 20 through the exposure hole 33. It should be noted that the exposure hole 33 here is configured to expose the positive pole terminal 201 or the negative pole terminal 202 of one battery cell 20 adjacent to the output bar, and the exposure hole 33 is arranged corresponding to one second welding hole 41 on the insulating film 4 close to the output bar. When the CCS assembly 1 and the battery cells 20 are assembled, the exposure holes 33 are beneficial to the positioning and assembly of the CCS assembly 1 and the battery cells 20 of the battery module, which may effectively improve the assembly efficiency and accuracy of the CCS assembly 1.

As illustrated in FIG. 1 to FIG. 3, in the embodiments, the busbar group may be provided with insulating films 4 on both sides facing and facing away from the battery cells 20. The CCS assembly 1 further includes a signal acquisition component connected to the busbar group. Specifically, input terminals of the signal acquisition component are arranged corresponding to the output bars and the connecting bars 10c. The signal acquisition component is located between the insulating film 4 and the busbar group. The insulating films 4 are provided on both sides of the busbar group in the thickness direction, which may further improve the structural strength of the CCS assembly 1 and improve the robustness of the output bars and the connecting bars 10c after they are laid out. It should be noted that, as illustrated in FIG. 2 and FIG. 3, the two insulating films 4 over and below the busbar group are respectively provided with the second welding holes 41. When in use, the positive pole terminals 201 and the negative pole terminals 202 of the battery cells 20 are abutted to the output bars and the connecting bars 10c through the second welding holes 41 of the lower insulating film 4, and a welding gun is abutted to the output bars and the connecting bars 10c through the second welding holes 41 of the upper insulating film 4 to perform the welding operation.

The signal acquisition component in the embodiments may be a flexible printed circuit (FPC) 5 or a signal acquisition wire harness. Preferably, the signal acquisition component is the FPC 5. Athickness of the FPC 5 is thin, which is beneficial to reducing the thickness of the CCS assembly 1. The FPC 5 extends along a length direction of the battery module, input terminals of the FPC 5 are connected to the output bars and the connecting bars 10c to monitor voltages or temperature signals of the battery cells 20 corresponding to the output bars and the connecting bars 10c. Output terminals of the FPC 5 are arranged at one end of the battery module in the length direction and connected to a connector 6, which is configured to connect with a battery management system (BMS).

In the embodiments, in order to prevent a layout (mainly a thickness of the FPC 5) of the FPC 5 from affecting the welding of the output bars and connecting bars 10c to the battery cells 20, preferably, the signal acquisition component (i.e. the FPC 5) is disposed on one side of the busbar group away from the battery cells 20. That is, the signal acquisition component is located between the busbar group and the upper insulating film 4.

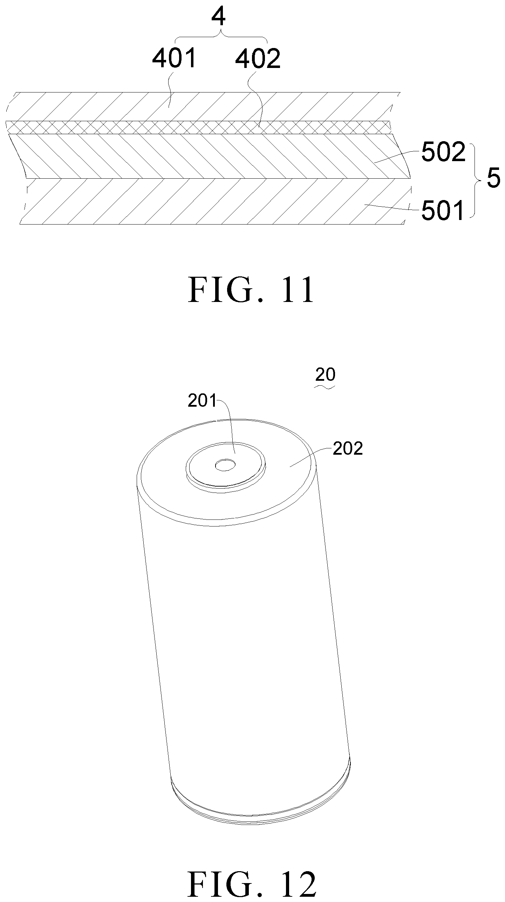

The FPC 5 includes a PI layer 501 and a substrate layer 502 stacked on the PI layer 501. The substrate layer 502 is provided with collection nickel sheets 51 and a negative temperature coefficient thermistor (NTC) 52 to form the input terminals of the signal acquisition component. The PI layer 501 is disposed between the substrate layer 502 and the busbar group, and the substrate layer 502 is disposed between the PI layer 501 and the insulating film 4 bonded to the FPC 5. As illustrated in FIG. 3 and FIG. 11, the insulating film 4 (the upper insulating film 4 in the embodiments) here may serve as another PI layer 501 stacked on the substrate layer 502 (a conventional FPC 5 includes at least two PI layer 501, and the substrate layer 502 is sandwiched between two PI layers 501). That is, the PI layer 501, the substrate layer 502, and the upper insulating film 4 stacked sequentially from bottom to top constitute a complete FPC 5, which may reduce the costs of the FPC 5, effectively protect the FPC 5 and the NTC 52, reduce the thickness of the FPC 5, reduce the thickness of the CCS assembly 1, and improve an integration rate of the CCS assembly 1.

It should be noted that for the output terminals of the FPC 5, that is, an end equipped with the connector 6, may be protected by the upper insulating film 4 or a conventional PI film, as long as it does not affect the normal use of the FPC 5.

Of course, in other embodiments, the FPC 5 may also be disposed on the side of the busbar group facing the battery cells 20. Accordingly, the insulating film 4 (the lower insulating film 4) disposed close to the battery cells 20 serves as a part of the FPC 5, as described above, will not be repeated here.

As illustrated in FIG. 2 and FIG. 3, first welding holes 43 corresponding to the collection nickel sheets 51 are defined on the insulating films 4 to expose the collection nickel sheets 51. When in use, the collection nickel sheets 51 contact the output bars and connecting bars 10c through the first welding holes 43 of the lower insulating film 4, and the welding gun contacts the collection nickel sheets 51 through the first welding holes 43 of the upper insulating film 4 to weld the collection nickel sheets 51 with the output bars.

In the embodiments, the motherboard 31 is provided with first positioning holes 34 passing through the motherboard 31, the insulating films 4 are provided with second positioning holes 42, and the output bars are provided with third positioning holes 125. The first positioning hole 34, the second positioning hole 42, and the third positioning hole 125 are arranged correspondingly. When in use, after the insulating films 4, the output bars, and the positioning plates are assembled, the first positioning hole 34 is coaxial with its corresponding second positioning hole 42 and third positioning hole 125. The first positioning holes 34, the second positioning holes 42, and the third positioning holes 125 are configured for the positioning assembly of the insulating films 4, the output bars, and the positioning plates, which is conducive to improving the assembly accuracy of CCS assembly 1.

In the embodiments, as illustrated in FIG. 5 and FIG. 6, in the extending direction of the extension portion 122, a first fillet 321 is provided on an outer edge of the connecting protrusion 32 away from the free end of the extension portion 122. In the extending direction of the extension portion 122, top corners of outer edges of the motherboard 31 close to the free end of the extension portion 122 are provided with second fillets 311. The first fillet 321 here is configured to reduce the stress concentration on the outer edge of the connecting protrusion 32 toward the bending portion 124, which facilitates the positioning plate demoulding and prevents the output bars from being damaged when the output bars are assembled. The second fillets 311 are configured to reduce the stress concentration on the top corners (i.e. the side of the positioning plate away from the outer connection part 11) of the motherboard 31, thereby preventing other components of the CCS assembly 1 from being scratched during the assembly process.

In some embodiments, at least a part of the connecting bars 10c is supported by the positioning plate. Specifically, a portion of the positioning plate extending toward the connecting bar 10c adjacent to the corresponding output bar, that is, the motherboard 31, may also provide support for the connecting bar 10c, thereby further improving the structural strength of the CCS assembly 1. When in use, the motherboard 31 is provided with corresponding holes, so that the connecting bars 10c can pass through the motherboard 31 and be connected to the battery cells 20.

The embodiments also provide a battery module. The battery module includes battery cells 20 and the aforementioned CCS assembly 1. The battery cells 20 pass through the insulating film 4 and the positioning plates and are connected to the busbar group. The battery module has high safety and low production costs.

## Claims

1. A cells contact system (CCS) assembly (1), applied in a battery module and **characterized by** comprising:
a busbar group, comprising two output bars (10a, 10b), a plurality of connecting bars (10c), and two positioning plates (30a, 30b), wherein the two output bars (10a, 10b) are correspondingly arranged at two ends of the battery module in a length direction, and the plurality of connecting bars (10c) are arranged between the two output bars (10a, 10b); at the same end of the battery module in the length direction, one of the output bars (10a, 10b) is at least partially supported by one of the positioning plates (30a, 30b) that is correspondingly arranged, and each of the two positioning plates (30a, 30b) extends toward one of the connecting bars (10c) adjacent to a corresponding one of the two output bars (10a, 10b); and
an insulating film (4), disposed on one side of the busbar group facing battery cells (20) of the battery module, wherein the busbar group is connected to the insulating film (4).

2. The CCS assembly according to claim 1, **characterized in that** the busbar group is bonded or thermally pressed with the insulating film (4).

3. The CCS assembly according to claim 1, **characterized by** comprising:
two insulating films (4), wherein one of the two insulating films (4) is disposed on the side of the busbar group facing the battery cells (20), and the other one of the two insulating films (4) is disposed on one side of the busbar group facing away from the battery cells (20); and
a signal acquisition component, connected to the busbar group, and disposed between one of the insulating films (4) and the busbar group.

4. The CCS assembly according to claim 3, **characterized in that** the signal acquisition component is a flexible printed circuit (FPC) (5), the FPC (5) comprises a PI layer (501) and a substrate layer (502) stacked on the PI layer (501), and the substrate layer (502) is provided with collection nickel sheets (51) serving as input terminals of the signal acquisition component;
the PI layer (501) is disposed between the substrate layer (502) and the busbar group, and the substrate layer (502) is disposed between the PI layer (501) and one of the insulating films (4) bonded to the FPC (5); and
each of the insulating films (4) is provided with first welding holes (43) corresponding to the collection nickel sheets (51), and each of the first welding holes exposes a corresponding one of the collection nickel sheets (51).

5. The CCS assembly according to claim 3, **characterized in that** the signal acquisition component is an FPC (5), and the FPC (5) is disposed on the side of the busbar group facing away from the battery cells (20).

6. The CCS assembly according to claim 1, **characterized in that** the insulating film (4) is provided with second welding holes (41), and each of the second welding holes (41) passes through the insulating film (4);
each of the connecting bars (10c) comprises at least one conductive unit (13), the conductive unit (13) comprises a positive part (131) and a negative part (132), and the positive part (131) and the negative part (132) pass through corresponding ones of the second welding holes (41) and abut against corresponding ones of the battery cells (20).

7. The CCS assembly according to any one of claims 1-6, **characterized in that** each of the output bars (10a, 10b) comprises at least one extension portion (122), and a free end of the extension portion (122) is connected to one of the battery cells (20);
each of the positioning plates (30a, 30b) comprises a motherboard (31) and a connecting protrusion (32) provided on a side surface of the motherboard (31) facing the extension portion (122) that is correspondingly arranged, and the connecting protrusion (32) supports the extension portion (122); and
the connecting protrusion (32) is disposed away from the free end of the extension portion (122) in an extending direction of the extension portion (122).

8. The CCS assembly according to claim 7, **characterized in that** each of the output bars (10a, 10b) comprises an inner connection part (12) and an outer connection part (11) connected with each other, and the outer connection part (11) and the inner connection part (12) are separate parts;
a thickness of the outer connection part (11) is greater than a thickness of the inner connection part (12);
the extension portion (122) are a part of the inner connection part (12);
the inner connection part (12) further comprises a main portion (121) connected to the outer connection part (11); and
the extension portion (122) is provided on one side of the main portion (121) facing away from the outer connection part (11), and the extension portion (122) is configured to connect with a positive pole terminal (201) or a negative pole terminal (202) of one of the battery cells (20).

9. The CCS assembly according to claim 7, **characterized in that** the motherboard (31) is provided with at least one exposure hole (33) passing through the motherboard (31), and the free end of the extension portion (122) is connected to one of the battery cells (20) through the exposure hole (33).

10. The CCS assembly according to claim 7, **characterized in that** the motherboard (31) is provided with first positioning holes (34) each passing through the motherboard (31), the insulating film (4) is provided with second positioning holes (42), and the output bars (10a, 10b) are provided with third positioning holes (125); and the first positioning holes (34), the second positioning holes (42) and the third positioning holes (125) are arranged correspondingly.

11. The CCS assembly according to any one of claims 1-6, **characterized in that** the insulating film (4) comprises a base film (401) and an adhesive layer (402), and the adhesive layer (402) is disposed on one side facing the busbar group; and
a thickness of the base film (401) is defined as D1, where 0 µm < D1 ≤ 150 µm; and a thickness of the adhesive layer (402) is defined as D2, where 0 µm < D2 ≤ 50 µm.

12. The CCS assembly according to claim 7, **characterized in that** in the extending direction of the extension portion (122), a first fillet (321) is provided on an outer edge of the connecting protrusion (32) away from the free end of the extension portion (122).

13. The CCS assembly according to claim 7, **characterized in that** in the extending direction of the extension portion (122), top corners of an outer edge of the motherboard (31) close to the free end of the extension portion (122) are provided with second fillets (311).

14. The CCS assembly according to claim 1, **characterized in that** at least a part of the connecting bars (10c) is supported by the positioning plates (30a, 30b).

15. A battery module, **characterized by** comprising battery cells (20) and the CCS assembly (1) according to any one of claims 1-14, wherein the battery cells (20) pass through the insulating film (4) and the positioning plates (30a, 30b) to connect with the busbar group.
